# EUROPEAN PATENT APPLICATION

(11) **EP 1 855 478 A1**
(43) Date of publication of application: **14.11.2007**
(21) Application number: 06290756.3
(22) Date of filing: 09.05.2006
(51) Int. Cl.: H04N 7/173

(54) **Method for fast zapping between tv channels**

(71) Applicant: Alcatel Lucent, 75008 Paris (FR)
(72) Inventor: Vandaele, Piet Michel Albert, 9000 Gent (BE)
(74) Representative: Narmon, Gisèle Marie Thérèse

(57) **Abstract**

To zap towards a TV channel, a join request is sent from the viewer towards the TV server (101). Thereupon, a low resolution version of the TV channel is temporarily unicasted towards the viewer. In a second step, a switch is realized from the low resolution version of the TV channel to a multicasted high resolution version of the TV channel.

## Description

### Field of the Invention

The present invention generally relates to changing or zapping between TV channels or video streams in a digital TV environment. In particular, the invention resolves the problem of fast channel changing, i.e. changing from one TV channel or video stream to another, multicast or broadcast TV channel with reduced latency in order to improve the viewer's experience.

### Background of the Invention

Digital TV or video streams may be encoded in MPEG format, e.g. MPEG2 or MPEG 4 format, in which case they are transferred (in unicast or multicast fashion) as a sequence of frames. These frames are either I frames (Intra frames, or independent standalone frames that can be decoded independently from any previous or subsequent frames), P frames (Predicted frames, whose decoding requires access to previous frames) or B frames (Bi-directional frames, whose decoding may involve previous and subsequent frames). Decoding of a new MPEG stream, e.g. a TV channel where the viewer zaps to, must start with an I frame because this is the sole type of frame which can be decoded independently and serve as a reference frame. These I frames however may appear in the MPEG stream as infrequent as every 1,5 or even 2 seconds, assuming that the MPEG stream is delivered as IPTV over a broadband connection. In the context of for instance mobile video and DivX compression, the distance between independent frames can even be larger, up to 1O seconds or more. Without measures to speed up the decoding, the IPTV end-user may experience delays of up to 2 seconds when zapping towards a new channel. The decoding and imaging of the channel may even be further delayed as a result of buffer fill constraints, i.e. buffer fill limits which have to be exceeded before the decoding process starts. A viewer however expects a channel to appear very rapidly after the channel has been selected. The acceptable range is 500 milliseconds or even less in order to experience instantaneous zapping. Having the new channel appear very quickly is much more important to the viewer's experience than receiving the new channel in full quality.

One prior art solution that reduces the zapping delay consists in sending a recent I-frame and subsequent non-I frames in unicast mode to the set-top box of the viewer that zaps to a new TV channel. This solution is described for instance in US Patent Application 2004/0034864 entitled "Seamless Digital Channel Changing". The recent I-frame and subsequent non-I frames are supposed to be buffered in the video server or an intermediate network node from where they can be unicasted to the end-user. This way, the set-top box can start decoding the new TV channel immediately, and later on, when sufficient frames have been received and buffered in the decoder, switch to the corresponding multicast TV channel. In this solution, the unicast stream is delayed vis-à-vis the corresponding multicast TV channel. Therefore, the unicast stream is sent at a bitrate which is higher than the nominal rate at which the TV channel is multicasted, e.g. at 1,3 times the nominal bit rate, in order to enable the unicast stream to catch up with the multicast stream (see paragraph 0070 on page 6 of US 2004/0034864).

The excess bandwidth temporarily consumed by the unicast stream is not negligible, and may impact the availability of resources in the last mile and backhaul networks for other services. In particular when the viewer zaps to a high resolution TV channels, like HDTV (High Definition Television) H.264 stream that requires 9 Mbps (megabits per second), a 30 % increase of the bit rate may correspond to an excess bandwidth amount in the order of 3 Mbps that is either not available in the network towards the viewer or that alternatively, when made available for the unicast TV stream, impacts the quality of other services, e.g. Internet access, concurrently used by the viewer or impacts other users that partially share network connections with the zapping viewer, for instance in the context of a shared medium like cable, PON (Passive Optical Network), WiMAX, etc.

US 2004/0034864 proposes to borrow the transient excess capacity that is required to implement this prior art solution from other subscribers on the same or a digital channel. A variant solution could be to drop part of the non-I frames, e.g. the B frames in order to speed up the unicast streaming of the new TV channel. A B-frame can be discarded from the unicast stream without significant visual impact for the viewer because there are no other frames that depend on the discarded B-frame and can be affected indirectly by the discard operation. Discarding B-frames reduces the total amount of data to be sent as part of the unicast stream to the viewer's set-top box , hence compensates for the excess bandwidth need resulting from the bit rate increase. Nevertheless, to obtain fast zapping, the I-frame still needs to be unicasted at the higher bit rate resulting in a temporary bandwidth increase in excess of the nominal broadcast TV channel bandwidth.

Another drawback of the known prior art solution based on unicast provisioning of the requested TV channel at increased bit rate, is the memory requirement on the video server or intermediate node that has to cache all TV channels at least up to the most recent multicasted I-frame.

A second prior art solution consists in generating two multicast streams for each TV channel: a high resolution multicast stream and an associated low resolution, low bit rate multicast stream with high I-frame rate. When the viewer zaps to a new TV channel, he/she is provided by e.g. the DSLAM (Digital Subscriber Line Access Multiplexer or access aggregation node in case of a video over DSL deployment scenario) with both the low resolution and high resolution multicast streams. The low resolution multicast stream enables quick decoding of the first I-frame since the I-frames are spaced closer therein. The article "Access Network Enhancements for the Delivery of Video Services" from authors R. Sharpe, D. Zriny and D. De Vleeschauwer for instance describes this solution on page 5 in a paragraph entitled "Fast Channel Changing". Therein, the I-frames can occur as frequent as 2 or 4 times per second in the low resolution multicast stream enabling the newly requested TV channel to be displayed within 500 milliseconds or less from the instant where the channel has been selected by the viewer. Soon after the first I-frame is received in the full resolution multicast stream, the end-user's set-top box will display the full resolution stream and signal the DSLAM (or other network node from which the two multicast streams are received) to stop sending the reduced resolution stream. The just mentioned article from R. Sharpe et al. can be retrieved from the Internet via the following URL:
http://www.alcatel.com/com/en/appcontent/apl/A0506-Video_services-EN_tcm172-262051635.pdf

Variants of the second prior art solution based on redundant multicast streams having different I-frame rates are also described in the PCT patent applications WO 2005/112465 entitled "Method and Apparatus Enabling Fast Channel Change for DSL System" and WO 2006/016950 entitled "Fast Channel Change in Digital Video Broadcast Systems over DSL Using Redundant Video Streams".

A disadvantage of this second prior art solution is that the time in between the I-frames in the low resolution multicast stream, which may be 0.5 seconds instead of 2 seconds in the high resolution multicast stream, still prevents the user from experiencing instantaneous zapping. Further, each multicasted TV channel has to be supplemented with a multicasted low resolution version, again impacting the overall bandwidth consumption in the access network and eventually also the backbone network.

It is an object of the invention to provide a method and system for fast zapping between digital TV channels which resolves the shortcomings of the above described prior art solutions. In particular, it is an object to disclose a mechanism for fast, instantaneous zapping between TV channels without impacting the network resources, i.e. not requiring any transient excess bandwidth, and with reduced memory requirements compared to the prior art solution wherein recent frames are buffered.

### Summary of the Invention

According to the present invention, the above defined object is realized through a method for zapping towards a TV channel as defined in claim 1, wherein a join request is sent from the viewer towards the TV server, a low resolution version of the TV channel is temporarily unicasted towards the viewer, and afterwards switching takes place from the low resolution version of the TV channel to a multicasted high resolution version of the TV channel.

Thus, the video server unicasts a low resolution version of the TV channel (e.g. an SDTV stream) up to for instance a point in time where the buffer of the viewer's set-top box is sufficiently filled. Then, the set-top box or the video server initiates a switch to the multicasted high resolution version of the TV channel, e.g. an HDTV stream. The low resolution version of the TV channel can be unicasted at increased bit rate without exceeding the nominal bit rate occupied by the high resolution version of the TV channel. Bursting the low resolution SDTV stream at 1.3 times the nominal SDTV bit rate will require less bandwidth than a high resolution HDTV stream. As a result, the end-user experiences instantaneous zapping. A few seconds later, the end-user starts viewing the new TV channel in full quality.

Since the high resolution version of the TV channel no longer has to be cached. Only the low resolution version of the TV channel has to be cached, but such low resolution version requires less memory, e.g. up to 4 or 5 times less memory in case the low resolution version is an SDTV stream and the high resolution version is an HDTV stream. Consequently, memory savings are realized in the video server or intermediate network nodes.

The current invention in addition relates to a corresponding system for zapping towards a TV channel as defined by claim 12, a set-top box for use in such system as defined by claim 13, a network node for use in such system as defined by claim 14, and a TV server for use in such system as defined by claim 15.

An optional feature of the zapping method according to the present invention is that the method comprises intercepting the join request and replacing the join request with a request for the low resolution unicast version of the TV channel. This optional feature is defined by claim 2.

Indeed, one way to implement the invention is through letting the set-top box or an intermediate node like a residential gateway or an access multiplexer (e.g. a DSLAM, CMTS, DLC or ONU) intercept the join request for the high resolution TV channel and replacing it with a request for the low resolution unicast stream. In this context, the "join request" should be interpreted broadly. It can be a specific signalling message to request the unicast stream, but it can also be the IGMP join message that is upstream travelling in order to join the multicast group that is receiving the full resolution multicast TV stream and that is intercepted e.g. by the DSLAM to be replaced with a request message for the low resolution unicast TV stream. It is also noticed that in case a viewer zaps from a TV channel to a mozaic channel where e.g. a grid of 3 by 4 TV channels are displayed, the zap request from the user may result in multiple (e.g. 12) join requests that can each be handled according to the present invention.

Another optional feature of the zap method according to the present invention is that it includes receiving the join request in the TV server, and responding to the join request by temporarily unicasting said low resolution version of the TV channel towards the viewer. This optional implementation is defined by claim 3.

Thus, as an alternative to intercepting the join request and replacing it with a request for a low resolution unicast stream, the join request for the multicast stream may reach the TV server or TV head-end and automatically be responded there with the low resolution unicast version of the TV channel.

A further optional feature of the current invention is that the low resolution version of the TV channel may be temporarily unicasted each time a viewer zaps towards the TV channel, as defined by claim 4.

Hence, the current invention may be implemented statically, in such a way that each join request is responded with a low resolution version of the requested channel.

Alternatively and also optional, the low resolution version of the TV channel may be temporarily unicasted depending on bandwidth availability on the connection towards the viewer, as defined by claim 5.

This way, a join request may be responded with the high resolution version of the requested TV channel, unicasted at an increased bit rate as is done in one of the prior art solutions, in case excess bandwidth is available on the connection towards the viewer, and may be responded with the low resolution version of the requested TV channel in cases where no or insufficient excess bandwidth is available on the network connections towards the zapping viewer.

In another alternative implementation of the current invention defined by claim 6, the said low resolution version of the TV channel is temporarily unicasted depending on the load of said TV server.

Thus, as an alternative to the bandwidth occupation on the network connections towards the zapping end-user, the load on the server or TV head-end may be decisive in determining whether the high resolution version of the TV channel (conform the prior art solution) or the low resolution version of the TV channel will be unicasted temporarily to the viewer.

Optionally, the high resolution version of the TV channel is a High Definition TV (HDTV) signal as defined by claim 7.

Indeed, on DSL or cable loops for instance, the high resolution version of the TV channel may be an HDTV signal, typically requiring about 9 Mbps, whereas the low resolution version may be an SDTV (Standard Definition TV) signal or a TV signal with even lower resolution.

Alternatively, as indicated by claim 8, the high resolution version of the TV channel may be a Standard Definition TV (SDTV) signal.

Indeed, in a video over WiMAX deployment scenario for instance, the high resolution version of the TV channel may be an SDTV signal whereas the low resolution version may be any version of the TV channel having a resolution smaller than that of SDTV.

Also optionally, the low resolution version of the TV channel may be a Standard Definition TV (SDTV) signal, as defined by claim 9.

One example where the low resolution version may be an SDTV signal is in the context of video over DSL or video over cable, where the user can request full resolution HDTV channels. Any other implementation wherein TV streams having a resolution better than that of SDTV can be requested however may elect according to the present invention to temporarily replace such TV stream with an SDTV version thereof in order to increase the zapping speed without impacting the bandwidth consumption.

With respect to claims 7 to 9, it is noticed that HDTV for instance is not uniquely defined in literature, and different standards exist. The claims are obviously not restricted to any particular standard, and it is clear that these features are optional to the invention, as the invention is equally advantageous when applied in systems where neither HDTV nor SDTV signals are distributed. One example could for instance be a system wherein IPTV is delivered in EDTV (Enhanced-Definition TV) format, and wherein according to the present invention, a TV format with lower quality/resolution is temporarily unicasted upon zapping.

A further optional feature of the zapping method according to the present invention implies switching from the low resolution version of the TV channel to the multicasted high resolution version of the TV channel on instruction of the viewer's set-top box. This optional feature is defined by claim 10.

If for instance the decoder in the set-top box has buffered sufficient frames of the low resolution TV stream, it may request to replace the low resolution unicast stream with the high resolution multicast stream, e.g. by issuing an leave request for the low resolution unicast stream and a join request for the high resolution multicast stream, or by issuing only an IGMP join message for the latter high resolution multicast stream if it is assumed that the network has the intelligence to stop sending the low resolution unicast stream thereupon.

As an alternative to claim 10, the current invention can be implemented such that switching from said low resolution version of the TV channel to the multicasted high resolution version of the TV channel occurs on instruction of the TV server, as defined by claim 11.

Thus, the intelligence to switch from the low resolution unicast stream to the high resolution multicast stream may be incorporated in the TV head-end as an alternative to the set-top box.

### Brief Description of the Drawings

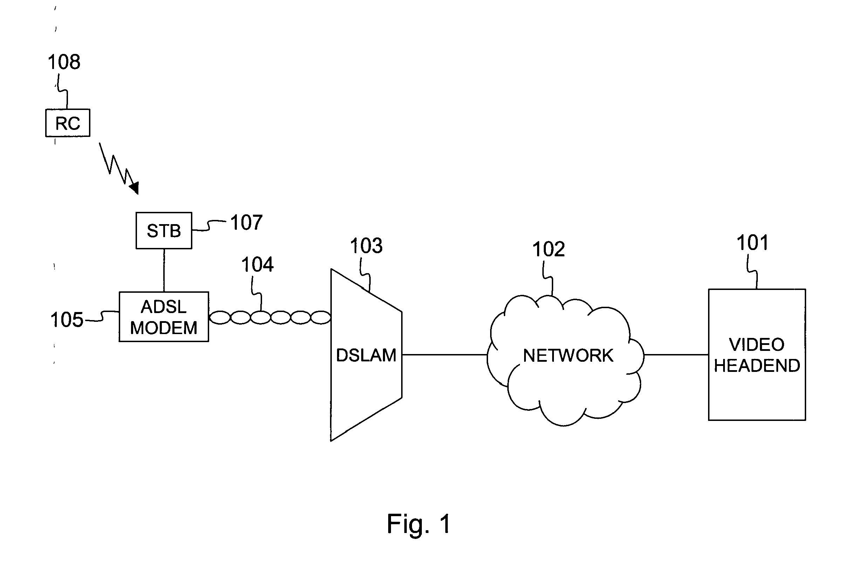

Fig. 1 illustrates a system wherein an embodiment of the zapping method according to the present invention is implemented.

### Detailed Description of Embodiment(s)

Fig. 1 shows a video headend 101 that delivers IPTV via network 102 to DSL (Digital Subscriber Loop) subscribers. Such a DSL subscriber is connected via an ADSL modem 105 and twisted pair copper 104 to a DSLAM (Digital Subscriber Line Access Multiplexer) 103 that further provides connectivity to the network 102. Inhouse, a set-top box 107 receives zap signals from the user's remote control 108, and decodes the IPTV signals for display on the user's screen or TV set. The set-top box 107 is connected to the user's ADSL modem 105, via a wired or wireless inhouse network.

When the user in Fig. 1 zaps to a high resolution HDTV channel by selecting the channel with his/her remote control, set-top box 107 shall intercept the zap request and issue a request for a unicast stream containing the low resolution SDTV version of the TV channel selected by the user. This request is upstream sent towards the video headend 101, and upon receipt of the request, the latter video headend 101 downstream sends a unicast version of the low resolution SDTV stream of the channel at 1.3 times the nominal SDTV bandwidth. The user experiences instantaneous zapping since the low resolution SDTV channel is sent starting from the most recently buffered I-frame. When the buffer of the set-top box 107 has been filled, the set-top box 107 switches to the multicasted HDTV version of the IPTV channel by issuing a join message for the multicast HDTV stream and a leave message for the unicast SDTV stream. The video headend shall stop sending the unicast SDTV stream as soon as the set-top box 107 has joined the multicast tree for the HDTV stream.

The bandwidth consumption will never exceed the bandwidth of the HDTV broadcast TV stream since 1,3 times the nominal SDTV bandwidth is less than the nominal HDTV bandwidth. Depending on the location of the video headend 101, bandwidth savings are realized on the last mile, i.e. the twisted pair loop 104, and also in the backhaul network 102. The implementation further realizes memory savings in the video headend 101 or an eventual video server integrated in or connected to the DSLAM 103 since the HDTV streams do no longer need to be cached. Only the lower resolution SDTV streams need to be cached but these require 4 to 5 times less memory than the corresponding HDTV stream.

Although the present invention has been illustrated by reference to a specific embodiment, it will be apparent to those skilled in the art that the invention is not limited to the details of the foregoing illustrative embodiment, and that the present invention may be embodied with various changes and modifications without departing from the spirit and scope thereof. For instance, the context of IPTV over ADSL was given as an example. The invention is not restricted to any particular underlying physical, network or transport layer technology, or to any specific encoding/decoding technique used for the IPTV streams. Another example is the location of the intelligence for switching from the low resolution to the high resolution channel. Although assumed to form part of the set-top box in the above described embodiment, such intelligence can be integrated in the video headend, in an intermediate network node like the DSLAM or a residential gateway, in a video server that is integrated in or coupled to the DSLAM, etc. Such intermediate network node must then be able to intercept the user's request for the high resolution channel, and replace it with a request for the corresponding low resolution unicast channel. Later on, e.g. when its buffers have reached a certain fill-level or upon signalling from the set-top box or the video headend, the intermediate element must be able to terminate unicasting the low resolution stream and ensure delivery of the corresponding high resolution multicast stream to the viewer. When the intelligence to switch between the unicast and multicast streams is integrated in the video headend, there is no need to replace the request for the high resolution TV channel with a request for the corresponding low resolution TV channel. The request for the high resolution TV channel may simply be responded with the low resolution unicast version of the channel up to the point in time where signalling is received from the set-top box or up to the point in time where the low resolution unicast stream has caught up with the high resolution multicast stream. The above described embodiment is to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

1. A method for zapping towards a TV channel, said method comprising sending a join request for said TV channel from the viewer towards the TV server (101),
**CHARACTERIZED IN THAT** said method further comprises temporarily unicasting towards said viewer a low resolution version of said TV channel, and switching from said low resolution version of said TV channel to a multicasted high resolution version of said TV channel.

2. A method for zapping towards a TV channel according to claim 1,
**CHARACTERIZED IN THAT** said method comprises intercepting said join request and replacing said join request with a request for said low resolution version of said TV channel.

3. A method for zapping towards a TV channel according to claim 1,
**CHARACTERIZED IN THAT** said method comprises receiving said join request in said TV server (101), and responding to said join request by temporarily unicasting said low resolution version of said TV channel towards said viewer.

4. A method for zapping towards a TV channel according to claim 1,
**CHARACTERIZED IN THAT** said low resolution version of said TV channel is temporarily unicasted each time a viewer zaps towards said TV channel.

5. A method for zapping towards a TV channel according to claim 1,
**CHARACTERIZED IN THAT** said low resolution version of said TV channel is temporarily unicasted depending on bandwidth availability on the connection (104) towards said viewer.

6. A method for zapping towards a TV channel according to claim 1,
**CHARACTERIZED IN THAT** said low resolution version of said TV channel is temporarily unicasted depending on the load of said TV server (101).

7. A method for zapping towards a TV channel according to claim 1,
**CHARACTERIZED IN THAT** said high resolution version of said TV channel is a High Definition TV (HDTV) signal.

8. A method for zapping towards a TV channel according to claim 1,
**CHARACTERIZED IN THAT** said high resolution version of said TV channel is a Standard Definition TV (SDTV) signal.

9. A method for zapping towards a TV channel according to claim 1,
**CHARACTERIZED IN THAT** said low resolution version of said TV channel is a Standard Definition TV (SDTV) signal.

10. A method for zapping towards a TV channel according to claim 1,
**CHARACTERIZED IN THAT** switching from said low resolution version of said TV channel to said multicasted high resolution version of said TV channel occurs on instruction of said viewer's set-top box (107).

11. A method for zapping towards a TV channel according to claim 1,
**CHARACTERIZED IN THAT** switching from said low resolution version of said TV channel to said multicasted high resolution version of said TV channel occurs on instruction of said TV server (101).

12. A system for zapping towards a TV channel, said system comprising means (108, 107) for sending a join request for said TV channel from the viewer towards the TV server (101),
**CHARACTERIZED IN THAT** said system further comprises means for temporarily unicasting towards said viewer a low resolution version of said TV channel, and means for switching from said low resolution version to a multicasted high resolution version of said TV channel.

13. A set-top box (107) for use in a system as defined by claim 12.

14. A network node (103) for use in a system as defined by claim 12.

15. A TV server (101) for use in a system as defined by claim 12.
